# EUROPÄISCHE PATENTSCHRIFT

(11) **EP 0 560 785 B1**
(45) Veröffentlichungstag und Bekanntmachung des Hinweises auf die Patenterteilung: **01.05.1996**
(21) Anmeldenummer: 91918516.5
(22) Anmeldetag: 25.10.1991
(51) Int. Cl.: C09D 5/10

(54) **ZWEIKOMPONENTIGES EPOXIDHARZ-ZINKSTAUB-GRUNDBESCHICHTUNGSMITTEL FÜR STAHLFLÄCHEN**
TWO-COMPONENT EPOXY RESIN/ZINC DUST PRIMING COAT FOR STEEL SURFACES
ENDUIT DE FOND A DEUX COMPOSANTS EN RESINE EPOXYDE ET EN POUSSIERE DE ZINC POUR SURFACES EN ACIER

(30) Priorität: 27.11.1990 DE 4037599
(43) Veröffentlichungstag der Anmeldung: 22.09.1993
(73) Patentinhaber: Sika Chemie GmbH, D-70439 Stuttgart (DE)
(72) Erfinder: ZIPPERLEN, Sabine, D-7000 Stuttgart 50 (DE); PETRIKAT, Axel, D-7140 Ludwigsburg (DE); WEKENMANN, Guido, deceased (DE)
(74) Vertreter: Wolf, Eckhard, Dr.-Ing.
(86) Internationale Anmeldenummer: EP9102024
(87) Internationale Veröffentlichungsnummer: WO9209664

(56) Entgegenhaltungen:
- EP-A- 0 165 508
- EP-A- 0 291 260
- EP-A- 0 385 880

## Beschreibung

Die Erfindung betrifft ein antikorrosives zinkhaltiges Grundbeschichtungsmittel für Stahlflächen.

Die Verwendung von Zinkstaub und/oder Zinkblättchen als Korrosionsschutzpigment in organischen Grundbeschichtungsmitteln ist bekannt. Die Grundbeschichtungsmittel bestehen im wesentlichen aus einem Kunstharz, das zur Einstellung einer im Gebrauchszustand weichen Konsistenz in einem organischen Lösemittel gelöst ist. Als organische Lösemittel kommen vor allem aromatische Kohlenwasserstoffe, wie Xylol, in Betracht. Das Grundbeschichtungsmittel wird in seiner flüssigen Form in geschlossenen Behältern gelagert und zur Anlieferung gebracht. Beim bestimmungsgemäßen Gebrauch wird es unmittelbar auf die zuvor gereinigte Stahlfläche aufgetragen. Durch Verdampfen des Lösemittels härtet das Gemisch aus und bildet eine feste geschlossene Schicht, in welcher der Zinkstaub in feinverteilter Form enthalten ist. Beim Eindringen von feuchter Luft in die Grundbeschichtung bildet sich an den Zinkteilchen vor allem basisches Zinkcarbonat (4ZnO.CO₂·4H₂O), das unter Volumenvergrößerung zu einer Verdichtung der Grundbeschichtung führt und die darunterliegende Stahloberfläche vor einer Zerstörung schützt. Ein weiterer antikorrosiver Effekt ist auf die kathodische Schutzwirkung des Zinkstaubpigments zurückzuführen.

Bei der Applikation der bekannten Zinkstaub-Grundbeschichtungsmittel werden erhebliche Mengen an organischen Lösemitteln an die Umgebungsluft abgegeben.

Um diesen Nachteil zu vermeiden ist es bei einem zweikomponentigen Korrosionsschutzmittel bekannt (EP-A-0385880), als erste Reaktionskomponente (Komponente A) pulver- oder blättchenförmiges Zink, das in einer ein wasserfreies, wasseremulgierbares Epoxidharzbindemittel enthaltenden organischen Flüssigkeit dispergiert ist, und eine zweite Reaktionskomponente (Komponente B) bestehend aus einem wasserverdünnten oder wassergelösten Polyaminhärter zu verwenden, welche Reaktionskomponenten unter Bildung einer viskosen aushärtbaren Anstrichmasse miteinander mischbar sind. Die Komponente A enthält dort zusätzlich Glykolether als wasserlösliches organisches Lösungsmittel sowie Kieselsäure in kristalliner und amorpher Konsistenz.

Ausgehend hiervon liegt der Erfindung die Aufgabe zugrunde, ein aus zwei Flüssigkomponenten bestehendes Grundbeschichtungsmittel zu entwickeln, das umweltfreundlich hergestellt und gelagert sowie einfach appliziert werden kann, und das dennoch schnelltrocknend ist und gute Korrosionseigenschaften aufweist.

Zur Lösung dieser Aufgabe wird gemäß der Erfindung ein antikorrosives zinkhaltiges Grundbeschichtungsmittel für Stahlflächen vorgeschlagen, mit
A) einer ersten Reaktionskomponente bestehend aus pulver- oder blättchenförmigem Zink, das in einem Gemisch aus einem wasserfreien, wasseremulgierbaren Epoxidharzbindemittel und einem flüssigen und/oder in einem organischen Lösemittel gelösten Kunstharz dispergiert ist
B) und einer zweiten Reaktionskomponente, bestehend aus einem wasserverdünnten oder wassergelösten Polyaminhärter,

welche Reaktionskomponenten unter Bildung einer viskosen aushärtbaren Anstrichmasse miteinander mischbar sind, wobei das Kunstharz ein durch Verdampfen des organischen Lösemittels oder durch Reaktion mit der zweiten Reaktionskomponente oder mit Sauerstoff die Trocknung der Anstrichmasse beschleunigendes Harz enthält.

Das Zinkpulver wird also der wasserfreien Komponente A des zweikomponentigen Epoxidharz-Zinkstaub-Grundbeschichtungsstoffes zugesetzt, da sonst aufgrund einer Reaktion von Zink mit Wasser die Lagerstabilität der Mischung ungenügend wäre. Dem Kunstharzzusatz in der Komponente A kommt vor allem die Aufgabe zu, durch Verdampfen des organischen Lösemittels oder durch Reaktion mit dem Härter oder mit Sauerstoff die Trocknung zu beschleunigen. Das Kunstharz bildet also eine Art Gerippe, das das System zusammenhält und zu einer Oberflächentrocknung führt, solange die Reaktion des Epoxidharz-Bindemittels mit dem Polyamin noch nicht abgeschlossen ist.

Als Kunstharze kommen in Betracht
- in organischen Lösemitteln gelöste Kohlenwasserstoffharze, wie Ketonharze, Aldehydharze und Phenolharze,
- Harze, die eine mit der Amingruppe der Komponente B reaktive Gruppe, insbesondere eine Epoxidgruppe, eine Carboxylgruppe oder eine Isocyanatgruppe, aufweisen,
- oxidativ trocknende Systeme, insbesondere Alkydharze.

Soweit die Kunstharze einen organischen Lösemittelanteil enthalten, beträgt dieser nur einen Bruchteil des Lösemittelanteils in bekannten zweikomponentigen Beschichtungsmitteln.

Das Epoxidharz-Bindemittel enthält bevorzugt Bisphenol A- und/oder Bisphenol AF-Harze.

Gemäß einer bevorzugten Ausgestaltung der Erfindung weist das erfindungsgemäße Grundbeschichtungsmittel folgende Zusammensetzung auf:

### Komponente A

1 bis 20 Gewichtsprozent wasseremulgierbares Epoxidharz auf Basis Bisphenol A und/oder Bisphenol AF;
bis zu 10 Gewichtsprozent hydrophobe und/oder hydrophile Kunstharze, wie Kohlenwasserstoffharz;
0 bis 10 % organisches Lösemittel, wie Xylol;
10 bis 95 Gewichtsprozent Zinkpulver oder Zinkblättchen;
0 bis 90 Gewichtsprozent Extender, insbesondere Talkum, Bariumsulfat und/oder Glimmer;

### Komponente B

1 bis 5 Gewichtsprozent Polyamin;
5 bis 15 Gewichtsprozent Wasser;

### Rest

Additive wie Antiabsetzmittel, Entschäumer,
Thixotropiermittel oder Netzmittel.

Bei dem erfindungsgemäßen Grundbeschichtungsmittel ersetzt das in der Komponente B enthaltene Wasser ganz oder teilweise das sonst übliche organische Lösemittel hinsichtlich seiner Funktion der Viskositätserniedrigung im Gebrauchszustand. Die erfindungsgemäß zum Einsatz kommenden Polyamine sind überwiegend aliphatischer Natur und müssen eine Balance zwischen Hydrophilie und Hydrophobie aufweisen, um eine gute Aushärtung mit dem Epoxidharz zu gewährleisten. Wasseremulgierbares Epoxidharz und Polyamin sind dazuhin in ihrer Mengenzugabe stöchiometrisch aufeinander abzustimmen.

Die guten Korrosionsschutzeigenschaften des auf diese Weise hergestellten Grundbeschichtungsmittels sind nur möglich, weil das mit Wasser reaktive Zinkpulver durch das zunächst wasserfreie Epoxidharzbindemittel während der relativ kurzen Applikationszeit gegen Wasserzutritt weitgehend abgeschirmt wird.

### Ausführungsbeispiel 1

100 Gewichtsteile einer homogen dispergierten Mischung aus 89,0 Gewichtsteilen Zinkstaub und 7,5 Gewichtsteilen einer Mischung aus wasseremulgierbarem Epoxidharz und wasserverdünnbarem Phenolharz im Verhältnis 1:1 und 3,5 Gewichtsteilen Xylol als Komponente A wurden mit 8,2 Gewichtsteilen eines 30%-ig in Wasser gelösten Polyamins als Komponente B zu einem verarbeitbaren viskosen Anstrichmittel vermischt.

### Ausführungsbeispiel 2

100 Gewichtsteile einer homogen dispergierten Mischung aus 86 Gewichtsteilen Zinkstaub und 9,5 Gewichtsteilen einer Mischung aus wasseremulgierbarem Epoxidharz und einer lösemittelhaltigen Ketonharzlösung (60%-ig) im Verhältnis 1 : 1,3, sowie 4,5 Gewichtsteilen Talkum-Extender als Komponente A werden mit 12,4 Gewichtsteilen eines 20%-igen wassergelösten Polyamins als Komponente B zu einem verarbeitbaren viskosen Anstrichmittel vermischt.

### Ausführungsbeispiel 3

Wie Ausführungsbeispiel 2 mit dem Unterschied, daß die Komponente A 90,5 Gewichtsteile Zinkstaub und keinen Extender enthält.

### Ausführungsbeispiel 4

Wie Ausführungsbeispiel 2 mit dem Unterschied, daß anstelle der Ketonharzlösung ein oxidativ trocknendes kurzöliges Alkydharz auf der Basis pflanzlicher Fettsäuren im Verhältnis 3 : 0,5 verwendet wird.

Die gemäß den Ausführungsbeispielen 1 bis 4 hergestellten Anstrichmittel wurden jeweils auf eine gereinigte Stahlfläche als Grundbeschichtung aufgetragen und nach einer Trocknungszeit von einer Woche bei einer Temperatur von 23 °C und 50 % Luftfeuchtigkeit dem Salzsprühtest nach DIN 50021-SS unterworfen. Die Stahloberfläche zeigte danach keinerlei Punktrostbildung, wie sie sonst bei wässrigen Korrosionsschutzgrundbeschichtungen üblich ist.

## Patentansprüche

1. Antikorrosives zinkhaltiges Grundbeschichtungsmittel für Stahlflächen, mit
A) einer ersten Reaktionskomponente bestehend aus pulver- oder blättchenförmigem Zink, das in einem Gemisch aus einem wasserfreien, wasseremulgierbaren Epoxidharzbindemittel und einem flüssigen und/oder in einem organischen Lösemittel gelösten Kunstharz dispergiert ist
B) und einer zweiten Reaktionskomponente, bestehend aus einem wasserverdünnten oder wassergelösten Polyaminhärter,
welche Reaktionskomponenten unter Bildung einer viskosen aushärtbaren Anstrichmasse miteinander mischbar sind, wobei das Kunstharz ein durch Verdampfen des organischen Lösemittels oder durch Reaktion mit der zweiten Reaktionskomponente oder mit Sauerstoff die Trocknung der Anstrichmasse beschleunigendes Harz enthält.

2. Grundbeschichtungsmittel nach Anspruch 1, **dadurch gekennzeichnet,** daß als Kunstharz ein in einem organischen Lösemittel gelöstes Kohlenwasserstoffharz, insbesondere ein Ketonharz, Aldehydharz oder Phenolharz, verwendet wird.

3. Grundbeschichtungsmittel nach Anspruch 1 oder 2, **dadurch gekennzeichnet,** daß das Kunstharz eine mit der Amin-Gruppe der zweiten Reaktionskomponente reaktive Gruppe, insbesondere eine Epoxidgruppe, Carboxylgruppe oder Isocyanatgruppe, aufweist.

4. Grundbeschichtungsmittel nach einem der Ansprüche 1 bis 3, **dadurch gekennzeichnet,** daß das Kunstharz ein oxidativ trocknendes Harz, insbesondere ein Alkydharz, enthält.

5. Grundbeschichtungsmittel nach einem der Ansprüche 1 bis 4, **dadurch gekennzeichnet,** daß das Epoxidharzbindemittel Bisphenol A- und/oder Bisphenol AF-Harze enthält.

6. Grundbeschichtungsmittel nach einem der Ansprüche 1 bis 5, **gekennzeichnet durch** folgende Zusammensetzung
- Komponente A
1 bis 20 Gewichtsprozent wasseremulgierbares Epoxidharz auf Basis Bisphenol A und/oder Bisphenol AF;
bis zu 10 Gewichtsprozent hydrophobe und/oder hydrophile Kunstharze, insbesondere Kohlenwasserstoffharz;
0 bis 10 % organisches Lösemittel, wie Xylol;
10 bis 95 Gewichtsprozent Zinkpulver oder Zinkblättchen;
0 bis 90 Gewichtsprozent Extender, insbesondere Talkum, Bariumsulfat und/oder Glimmer;
- Komponente B
1 bis 5 Gewichtsprozent Polyamin;
5 bis 15 Gewichtsprozent Wasser;
- Rest: Additive wie Antiabsetzmittel, Entschäumer, Thixotropiermittel oder Netzmittel.

## Claims

1. An anticorrosive zinc-containing undercoating agent for steel surfaces, comprising
A) a first reaction component consisting of powder-like or flake-like zinc, which is dispersed in a mixture of a water-free, water-emulsifiable epoxy resin binding agent and a liquid synthetic resin or a synthetic resin dissolved in an organic solvent
B) and a second reaction component consisting of a water-diluted or water-dissolved polyamine hardener,
which reaction components can be mixed with one another forming a viscous hardenable coating compound, in which the synthetic resin contains a resin accelerating the drying of the coating compound by evaporation of the organic solvent or by reaction with the second reaction component or with oxygen.

2. The undercoating agent according to Claim 1, characterized in that a hydrocarbon resin, in particular a ketonic resin, aldehyde resin or phenol resin, which is dissolved in an organic solvent, is used as synthetic resin.

3. The undercoating agent according to Claim 1 or 2, characterized in that the synthetic resin has a group, in particular an epoxy group, carboxyl group or isocyanate group, which is reactive with the amine group of the second reaction component.

4. The undercoating agent according to Claim 1 to 3, characterized in that the synthetic resin contains an oxidatively drying resin, in particular an alkyd resin.

5. The undercoating agent according to Claim 1 to 4, characterized in that the epoxy resin binding agent contains bisphenol A resins and/or bisphenol AF resins.

6. The undercoating agent according to one of the Claims 1 to 5, characterized by the following composition:
- Component A
1 to 20 percent by weight of water emulsifiable epoxy resin on the basis of bisphenol A and /or bisphenol AF;
up to 10 percent by weight of hydrophobic and/or hydrophilic synthetic resins, in particular hydrocarbon resin;
0 to 10 % organic solvent, such as xylol;
10 to 95 percent by weight of zinc powder or zinc flakes;
0 to 90 percent by weight of extenders, in particular talcum, barium sulfate and/or mica;
- Component B
1 to 5 percent by weight of polyamine;
5 to 15 percent by weight of water; and the remainder: additives such as anti-settling agents, defoamers, thixotropic agents or wetting agents.

## Revendications

1. Enduit de fond anticorrosif contenant du zinc pour des surfaces en acier, comprenant
A) un premier composant réactif composé de zinc en poudre ou en paillettes dispersé dans un mélange de liant à base de résine époxyde anhydre émulsifiable dans l'eau, et d'une résine synthétique liquide et/ou dissoute dans un solvant organique,
B) et un second composant réactif composé d'un durcisseur de polyamine dilué ou dissous dans l'eau,
lesdits composants réactifs pouvant être mélangés l'un avec l'autre, avec formation d'une masse de peinture visqueuse durcissable, la résine synthétique contenant une résine qui accélère le séchage de la masse de peinture par évaporation du solvant organique ou par réaction avec le second composant réactif ou avec l'oxygène.

2. Enduit de fond selon la revendication 1, caractérisé en ce que la résine synthétique utilisée est une résine à base d'hydrocarbures dissoute dans un solvant organique, en particulier une résine cétonique, une résine aldéhyde ou une résine phénolique.

3. Enduit de fond selon l'une des revendications 1 ou 2, caractérisé en ce que la résine synthétique présente un groupe entrant en réaction avec le groupe amine du second composant réactif, en particulier un groupe époxyde, un groupe carboxyle ou un groupe isocyanate.

4. Enduit de fond selon l'une des revendications 1 à 3, caractérisé en ce que la résine synthétique contient une résine à séchage par oxydation, en particulier une résine alkyde.

5. Enduit de fond selon l'une des revendications 1 à 4, caractérisé en ce que le liant à base de résine époxyde contient des résines bisphénoliques A et/ou des résines bisphénoliques AF.

6. Enduit de fond selon l'une des revendications 1 à 5, caractérisé par la composition suivante:
- Composant A
1 à 20 % en poids de résine époxyde émulsifiable dans l'eau à base de bisphénol A et/ou de bisphénol AF;
jusqu'à 10 % en poids de résines synthétiques hydrophobes et/ou hydrophiles, en particulier résines à base d'hydrocarbures;
0 à 10 % de solvant organique, par exemple xylène;
10 à 95 % en poids de poudre de zinc ou de paillettes de zinc;
0 à 90 % en poids de diluant, en particulier du talc, du sulfate de baryum et/ou du mica;
- Composant B
1 à 5 % en poids de polyamine;
5 à 15 % en poids d'eau;
- Reste : Additifs, par exemple des agents antidéposition, des agents antimoussants, des agents thixotropiques ou des agents mouillants.
